# EUROPÄISCHE PATENTANMELDUNG

(11) **EP 2 746 684 A1**
(43) Veröffentlichungstag der Anmeldung: **25.06.2014**
(21) Anmeldenummer: 13405140.8
(22) Anmeldetag: 17.12.2013
(51) Int. Cl.: F24D 3/16, F24F 5/00

(54) **Verfahren zur Klimatisierung eines Raumes sowie Klimadecke zur Durchführung des Verfahrens**

(30) Priorität: 19.12.2012 CH 28692012
(71) Anmelder: MWH Barcol-Air AG, 8603 Schwerzenbach (CH)
(72) Erfinder: Hecker, Tomas, CH-8603 Schwerzenbach (CH)
(74) Vertreter: Wagner, Wolfgang Heribert

(57) **Zusammenfassung**

Eine Klimadecke in einem geschlossenen Raum (1) umfasst Luftkühlelemente (10), welche in einem von einer Aussenwand (4) mit Fenster (5) beabstandeten, an eine Rückwand (7) anschliessenden ersten Bereich angeordnet sind und durch Flüssigkeit kühl- oder heizbare Strahlungselemente (11) in einem den Rest einer Raumdecke (3) ausfüllenden, an die Aussenwand (4) anschliessenden zweiten Bereich. Die aus den Luftkühlelementen (10) ausströmende Kaltluft strömt in Bodennähe gegen die Aussenwand (4) und trifft dort auf eine längs derselben nach unten gerichtete Kaltluftströmung. Die beiden Strömungen stauen sich gegenseitig zurück, sodass sich keine störende Kaltluftwalze ausbilden kann. Die Strahlungselemente (11) tauschen mit dem Raum (1) durch Strahlung Wärme aus und können zur Verstärkung der Kühlung oder auch zum Heizen eingesetzt werden.

## Beschreibung

### Technisches Gebiet

Die Erfindung betrifft ein Verfahren zur Klimatisierung, vor allem Kühlung eines Raumes, z.B. eines Büros sowie eine Klimadecke zur Durchführung des Verfahrens.

### Stand der Technik

Es ist bekannt, in einem zu klimatisierenden Raum eine Luftkühldecke vorzusehen, über welche Kaltluft in den Raum geleitet wird, sodass derselbe sowohl gekühlt als auch mit Frischluft versorgt wird. Meist erfolgt zusätzlich Strahlungskühlung, da die Luftkühlelemente von der Kaltluft auf eine Temperatur gekühlt werden, die tiefer ist als die Raumtemperatur. Eine für dies Art von Kühlung geeignete, aus Luftkühlelementen zusammengesetzte Luftkühlanordnung ist z.B. aus WO 00/52 395 A1 bekannt.

Es ist auch bekannt, einen Raum ausschliesslich mittels flüssigkeitsgekühlter oder -geheizter Strahlungselemente zu kühlen oder zu heizen, welche eine dem Raum zugewandte Fläche aufweisen, die mit dem Raum Strahlung austauscht und so denselben kühlt bzw. heizt. Dazu geeignete Kühlelemente sind etwa EP 0 769 659 A1 zu entnehmen.

Bei derartiger gleichmässiger Kühlung der Decke können jedoch wegen durch äussere Bedingungen verursachter thermischer Ungleichgewichte kompakte Kaltluftströmungen im Raum auftreten. Insbesondere führt die Abkühlung der Luft an der Aussenwand, besonders am Fenster, dort leicht zu einer absinkenden Kaltluftströmung, die eine den grössten Teil des Raumes erfassende Kaltluftwalze antreiben kann. Dies bewirkt Zugerscheinungen, welche die Behaglichkeit empfindlich stören können.

### Darstellung der Erfindung

Der Erfindung liegt die Aufgabe zu Grunde, ein Verfahren zur Klimatisierung eines Raumes anzugeben, bei dem kompakte Kaltluftströmungen vermieden werden. Diese Aufgabe wird durch die Merkmale im Kennzeichen des Anspruchs 1 gelöst. Ausserdem soll eine zur Durchführung des Verfahrens geeignete Klimadecke angegeben werden.

Beim erfindungsgemässen Verfahren wird durch Begrenzung der Einführung von Kaltluft auf einen von der Aussenwand beabstandeten Bereich eine ebenfalls nach unten gerichtete Strömung erzeugt, welcher der oben beschriebenen Kaltluftströmung an der Aussenwand entgegengesetzt ist und ihr etwa die Waage hält, sodass sich keine den Raum füllende Kaltluftwalze ausbilden kann, sondern nur gegeneinander gerichtete Teilströmungen, die sich vermischen und dabei in schwache kleinräumige Strömungen auflösen, die kaum mehr spürbar sind. Dabei kann gleichwohl eine hohe Kühlwirkung erzielt werden. Es ist auch möglich, in der Nähe der Aussenwand über Strahlungsaustausch schwach zu heizen und dadurch der beschriebenen Kaltluftströmung zusätzlich entgegenzuwirken.

### Kurze Beschreibung der Zeichnungen

Im folgenden wird die Erfindung anhand einer Figur, welche lediglich ein Ausführungsbeispiel darstellt, näher erläutert.

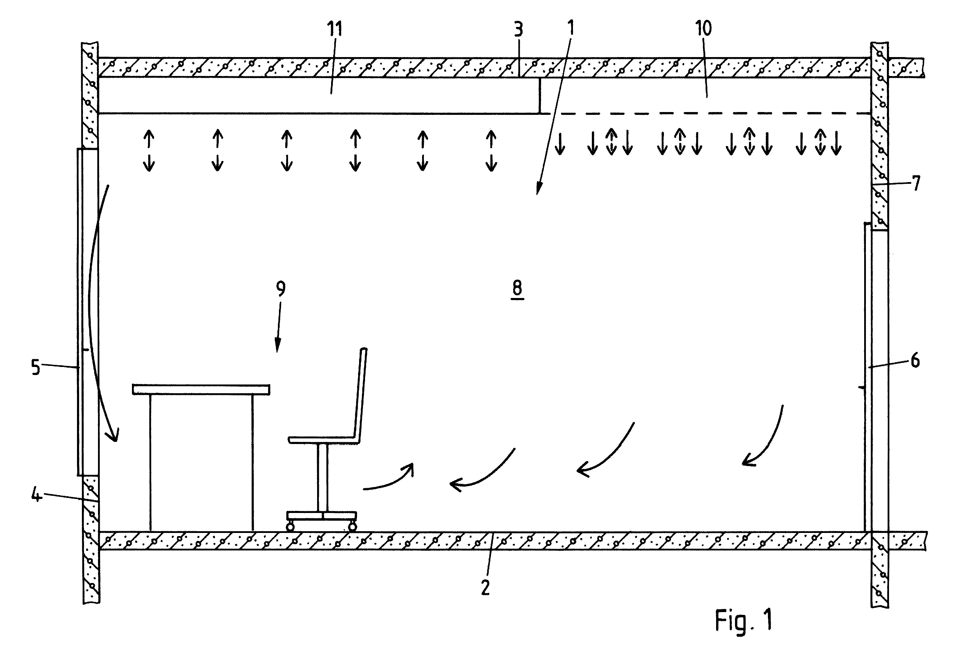

- Fig. 1: zeigt einen Längsschnitt durch einen Raum mit einer erfindungsgemässen Klimadecke.

### Wege zur Ausführung der Erfindung

Ein geschlossener Raum 1 von gewöhnlich rechteckiger Grundfläche, der klimatisiert werden soll, ist von einem Boden 2, einer Raumdecke 3 und einer Aussenwand 4 mit einem Fenster 5 begrenzt sowie von einer mit einer Tür 6 versehenen, der Aussenwand 4 gegenüberliegenden Rückwand 7 und zwei Seitenwänden, von denen nur die Seitenwand 8 sichtbar ist. In der Nähe des Fensters 5 ist ein Arbeitsplatz 9 mit einem Schreibtisch und einem Stuhl eingerichtet. Die Rückwand 7 und die Seitenwände 8 sind Innenwände, sodass an ihnen gewöhnlich kein grosses Temperaturgefälle auftritt.

Unterhalb der Raumdecke 3 ist eine Klimadecke aufgehängt, welche die Raumdecke 3 vollständig bedeckt. Sie besteht, in einem an die Rückwand 7 anschliessenden, nahezu die Hälfte der Raumdecke 3 einnehmenden rechteckigen ersten Bereich, der von der Aussenwand 4 um vorzugsweise mindestens 2m beabstandet ist, aus Luftkühlelementen 10. Sie können etwa wie die in WO 00/52 395 A1 beschriebenen beschaffen sein. Die Luftkühlelemente 10 sind an eine Kaltluftzuleitung (nicht dargestellt) angeschlossen und leiten Kaltluft über die Fläche des ersten Bereichs verteilt in den Raum 1 (durchgezogene Pfeile), derart, dass sie weitgehend laminar einströmt. Durch Wärmeaustausch zwischen der Kaltluft und den Luftkühlelementen 10 wärmt sich dabei die erstere etwas auf, während sich die letzteren abkühlen. Dies mindert die Gefahr, dass als unangenehm empfundene Kaltluftströme auftreten, während die Kühlleistung sich nicht merklich verringert, weil die gekühlten Luftkühlelemente 10 den Raum 1 zusätzlich durch Strahlungsaustausch kühlen (gestrichelte Pfeile).

In einem die restliche Fläche der Raumdecke 3 ausfüllenden, an die Aussenwand 4 anschliessenden, ebenfalls rechteckigen zweiten Bereich besteht die Klimadecke aus vorzugsweise flüssigkeitsgekühlten Strahlungselementen 11, welche beispielsweise wie die in EP 0 769 659 A1 beschriebenen ausgebildet sein können. Sie weisen jeweils eine waagrechte Platte mit einer gegen das Innere des Raumes 1 gerichteten ebenen Fläche auf, welche thermisch eng mit einem Rohr gekoppelt ist. Die Rohre verbinden eine Flüssigkeitszuleitung mit einer Flüssigkeitsableitung, derart, dass sie von gekühlter oder auch geheizter Flüssigkeit durchflossen und so die Platten, die mit dem Raum über Strahlung Wärme austauschen, gekühlt oder geheizt werden können.

Gewöhnlich bildet sich an der Aussenwand 4, wenn diese nicht durch Sonneneinstrahlung erwärmt wird, eine nach unten gerichtete Kaltluftströmung (Pfeil) aus, welche am Boden 2 gegen den Arbeitsplatz 9 umgelenkt wird. Dieser Strömung, die sonst als unangenehm empfunden werden könnte, wirkt jedoch die laminar in den Raum 1 strömende Kaltluft entgegen, die von den Luftkühlelementen 10 ausgeht, welche im von der Aussenwand 4 beabstandeten, an die Rückwand 7 anschliessenden ersten Bereich angeordnet sind. Diese Kaltluft, die höchstens in dem vom Arbeitsplatz 9 entfernten hinteren Teil des Raumes als Kaltluftströmung wahrgenommen werden kann, wird in Bodennähe in Richtung auf die Aussenwand 4 hin umgelenkt. Die einander begegnenden Strömungen stauen sich gegenseitig zurück, sodass ihre Intensität vermindert wird und sich keine raumgreifende Kaltluftwalze bilden kann. Die Kaltluft von beiden Seiten vermischt sich nur kleinräumig mit der Raumluft, sodass zwar eine Kühlwirkung eintritt und auch ausreichend Frischluft zugeführt wird, aber ohne dass dabei störende kompakte Kaltluftströme aufträten.

Durch zusätzliche Kühlung mittels der Strahlungselemente 11, die mit dem Raum 1 vor allem über Strahlung Wärme austauschen, kann die Kühlleistung erhöht werden, ohne dass die Strömungsmuster im Raum wesentlich beeinflusst würden.

Je nach Verhältnissen, z.B. am Morgen, können die Strahlungselemente 11 aber auch zum Heizen eingesetzt werden. In diesem Fall tragen sie zum Entstehen einer aufsteigenden Luftströmung im an die Aussenwand 4 anschliessenden Bereich des Raumes 1 bei, die ebenfalls der Ausbildung einer längs der Aussenwand 4 nach unten gerichteten kompakten Kaltluftströmung entgegenwirkt oder sich mit ihr vermischt und sie auflöst. Die Zufuhr von Kaltluft durch die Luftkühlelemente 10 kann in diesem Fall so weit reduziert werden, dass lediglich eine ausreichende Frischluftzufuhr sichergestellt ist.

Entscheidend ist jedoch, dass im reinen Kühlbetrieb durch ungleichmässige Verteilung der eingeführten Kaltluft über die Raumdecke - ausschliesslich oder jedenfalls weit überwiegend im von der Aussenwand beabstandeten ersten Bereich - der Ausbildung einer Kaltluftwalze im richtigen Ausmass entgegengewirkt wird. Es ist möglich, dabei das Einströmen der Kaltluft durch die Luftkühlelemente 10 gezielt so zu steuern oder zu regeln, dass jeweils diese Wirkung eintritt, d.h. so, dass die Kaltluftströmungen längs der Aussenwand 4 einerseits und aus den Luftkühlelementen 10 andererseits einander im wesentlichen die Waage halten.

### Bezugszeichenliste

- 1: Raum
- 2: Boden
- 3: Raumdecke
- 4: Aussenwand
- 5: Fenster
- 6: Türe
- 7: Rückwand
- 8: Seitenwand
- 9: Arbeitsplatz
- 10: Luftkühlelemente
- 11: Strahlungselemente

## Patentansprüche

1. Verfahren zur Klimatisierung eines Raumes (1), der auf einer Seite von einer Aussenwand (4) mit einem Fenster (5) begrenzt ist sowie auf weiteren Seiten von Innenwänden und bei welchem an einer Raumdecke (3) Kaltluft in den Raum eingeführt wird, **dadurch gekennzeichnet, dass** die Einführung der Kaltluft überwiegend oder ausschliesslich in einem von der Aussenwand (4) beabstandeten ersten Bereich der Raumdecke erfolgt.

2. Verfahren nach Anspruch 1, **dadurch gekennzeichnet, dass** die eingeführte Kaltluft laminar in den Raum (1) einströmt.

3. Verfahren nach Anspruch 1 oder 2, **dadurch gekennzeichnet, dass** der erste Bereich um mindestens 2m von der Aussenwand (4) beabstandet ist.

4. Verfahren nach einem der Ansprüche 1 bis 3, **dadurch gekennzeichnet, dass** der erste Bereich an eine der Aussenwand (4) gegenüberliegende Rückwand (7) anschliesst.

5. Verfahren nach einem der Ansprüche 1 bis 4, **dadurch gekennzeichnet, dass** mindestens an einem ausserhalb des ersten Bereichs liegenden zweiten Bereich der Raumdecke (3) Strahlungskühlung oder -heizung erfolgt.

6. Verfahren nach Anspruch 5, **dadurch gekennzeichnet, dass** der zweite Bereich an die Aussenwand (4) anschliesst.

7. Klimadecke zur Durchführung des Verfahrens nach einem der Ansprüche 1 bis 6, **dadurch gekennzeichnet, dass** sie unterhalb der Raumdecke (3) angeordnet ist und mindestens ein Luftkühlelement (10) umfasst, das einen von der Aussenwand (4) des Raumes (1) beabstandeten ersten Bereich der Raumdecke (3) ausfüllt.

8. Klimadecke nach Anspruch 7, **dadurch gekennzeichnet, dass** der erste Bereich um mindestens 2m von der Aussenwand (4) beabstandet ist.

9. Klimadecke nach Anspruch 7 oder 8, **dadurch gekennzeichnet, dass** der erste Bereich an eine der Aussenwand (4) gegenüberliegende Rückwand (7) anschliesst.

10. Klimadecke nach einem der Ansprüche 7 bis 9, **dadurch gekennzeichnet, dass** sie mindestens ein Strahlungselement (11) umfasst, das einen ausserhalb des ersten Bereichs liegenden zweiten Bereich der Raumdecke (3) ausfüllt.

11. Klimadecke nach Anspruch 10, **dadurch gekennzeichnet, dass** das mindestens eine Strahlungselement (11) flüssigkeitskühl- und heizbar ist.

12. Klimadecke nach Anspruch 10 oder 11, **dadurch gekennzeichnet, dass** der zweite Bereich an die Aussenwand (4) anschliesst.

13. Klimadecke nach einem der Ansprüche 7 bis 12, **dadurch gekennzeichnet, dass** sie die Raumdecke (3) vollständig bedeckt.
